# EUROPEAN PATENT SPECIFICATION

(11) **EP 3 087 124 B1**
(45) Date of publication and mention of the grant of the patent: **22.05.2019**
(21) Application number: 14827206.5
(22) Date of filing: 19.12.2014
(51) Int. Cl.: C08J 7/06, B65D 23/02, B65D 23/04

(54) **SURFACE AND COMPOSITION**
OBERFLÄCHE UND ZUSAMMENSETZUNG
SURFACE ET COMPOSITION

(30) Priority: 23.12.2013 GB 201322892
(43) Date of publication of application: 02.11.2016
(73) Proprietor: DuPont Nutrition Biosciences ApS, 1411 Copenhagen K (DK)
(72) Inventor: HENTZE, Hans Peter, 1411 Copenhagen K (DK); NIELSEN, Bjarne, 1411 Copenhagen K (DK); ANDERSEN, Pouel, 1411 Copenhagen K (DK)
(74) Representative: DuPont EMEA
(86) International application number: PCT/EP2014/078670
(87) International publication number: WO 2015/097079

(56) References cited:
- EP-A1- 1 992 420
- EP-A2- 1 992 567
- WO-A1-2010/007187
- GB-A- 2 337 528
- US-A- 5 296 021
- US-A- 5 503 866
- US-A- 5 662 956
- US-A- 5 955 165
- US-A1- 2002 142 088
- US-A1- 2004 234 667
- US-A1- 2007 179 230
- US-A1- 2009 068 323
- US-B1- 6 247 603
- ANONY: "Emulsifiers with HLB Values", , 29 April 2011 (2011-04-29), pages 1-3, XP007918468, Retrieved from the Internet: URL:http://www.theherbarie.com/files/resou rce-center/formulating/Emulsifiers_HLB_Val ues.pdf [retrieved on 2011-04-29]

## Description

### FIELD OF THE INVENTION

This invention relates to a polymer surface coated at least partly with a coating composition. The surface can be an inner surface facing a cavity in a container, which may hold a fluid. The coating composition enables improved release of the fluid from the container.

### BACKGROUND OF THE INVENTION

Consumer products with relatively high viscosity are often stored in containers such as flasks, cartons and tubes. Examples of these products are food products such as mayonnaise and concentrated and non-concentrated fermented products like yogurt, fromage frais, and Ymer (a concentrated mesophilic product) as well as non-food products like toothpaste, creams and sun lotion. Due to their relatively high viscosity a considerably high amount of product adheres to the sides of the container and is not easily removed here from. Thus, the consumer is not able to get the entire product out of the container. This is not only a waste of money but also a waste of resources.

The adherence of the viscous product to the sides of the container is due to the nature of the product. One solution to this problem is for example to re-design the shape of the container in order to remove corners and angles in which the viscous product could get caught. Another solution is to coat the surfaces of the container in order to reduce the surface tension between the product and the container, hereby reducing the adherence of the product to the sides of the container.

EP1992567 describes a container that has improved release properties for a viscous material where the container is configured to minimize residual material remaining in the container upon normal use thereof and also generally maintains the physical stability of material in the container. The container includes a coating applied to a portion of the inner surfaces thereof that is effective to provide the improved release properties. The document describes a coating, which is a lipid composition comprising glycerol esters having about 70 to about 100 percent fatty acid residues between 6 and 12 carbon atoms inclusive; and/or is a vegetable oil comprising a soluble antioxidant selected from the group consisting of TBHQ, BHT, BHA, gallates, tocopherols, tocotrienols, ascorbyl palmiate, and mixtures thereof. The document also describes how coatings with low viscosity such as pure oils show improved release properties.

US6247603 describes a dispensing apparatus and method for increasing product removal utilizing a coating. The apparatus includes a container having an outlet, a wall and a chamber. The chamber houses the coating and a product. The coating substantially covers the container wall. The product is dispensed through the container outlet without substantially removing all the coating applied to the container wall. The coating is a natural oil such as soybean oil, olive oil or a mineral oil.

Alternatively, other changes have been made to the container in order to increase the release properties such as including an additive into the material of the container in order to change the surface properties of the sides of the container and hereby increase the release properties.

US2003215555 describes food containers with increased release characteristics. More specifically, plastic food containers containing glycerol monostearate at a level of greater than about 4000 ppm, and preferably at levels of about 6000 to about 8000 ppm are provided. The glycerol monostearate apparently acts as a release agent to allow food products to be dispensed more easily. For example, cream cheese provided in the food containers of this invention can be dispensed in a single block which would be especially useful for recipe use.

US2007179230 describes how to prevent packaging materials made of thermoplastic polymers from adhering to pasty and fatty foods. A nonstick composition comprising a fatty acid ester of a polyhydric alcohol having at least one fatty acid radical per ester molecule with 19 or more carbon atoms is incorporated into at least one selected area of a polymer packaging material. Even if included only in surface-close regions or layers of the packaging material, a permanent nonstick effect is observed. This document thus does not describe the coating of a surface in order to improve the release properties of the surface.

Thus, multiple solutions exist in order to try to reduce the amount of residual product in the form of a fluid to be left in the containers. However, alternative solutions are still needed for reducing the amount of fluid left in the containers.

### OBJECT OF THE INVENTION

It is the object of the invention to provide a polymer surface coated at least partly with a coating composition to obtain improved release of a fluid from the surface as compared to a non-coated surface.

### DETAILED DESCRIPTION

This objective can be achieved by a polymer surface coated at least partly with a coating composition consisting of a homogenous solution comprising substantially only one phase comprising at least one oil and at least one emulsifier, wherein the HLB-value of said emulsifier is above 5 and said emulsifier is present in an amount of 0.1-10 wt% of the coating composition, and wherein said polymer is a polyester or a polyolefin. Hereby, is obtained a polymer surface with excellent release properties. This means that less fluid is retained on the polymer surface when draining the fluid from the surface in the case where the surface is coated with the coating composition as compared to the case where the surface is not coated.

By substantially homogenous solution is to be understood that the coating composition comprises substantially only one phase. Thus, a homogenous solution is a mixture of two or more components having a uniform appearance and composition.

Adding an emulsifier with an HLB-value above 5 to the coating composition highly increases the release properties of the coating composition as compared to having the oil alone as can be seen from the examples.

In a further embodiment, said emulsifier is a glycerol or polyglycerol ester. In a still further embodiment, said emulsifier is selected from diglycerol esters, polyglycerol fatty acid esters (PGEs), citric acid ester of mono-diglycerides (CITREM) or diacetyl tartaric ester of mono-diglycerides (DATEM). In another embodiment, said emulsifier is a monoglyceride or a mono-diglyceride of fatty acid esters.

Alternatively, the emulsifier is GRINDSTED® PGE, GRINDSTED® CITREM or GRINDSTED® DATEM.

In a still further embodiment, the HLB-value of the emulsifier is in the range of 7 to 12.

The higher the HLB of the emulsifier, the more hydrophilic it is. The HLB value describes the ratio of hydrophilic and lipophilic entities per molecule. According to the HLB method by Griffin and Davies (W.C. Griffin "Classification of Surface-Active Agents by 'HLB"', Journal of the Society of Cosmetic Chemists 1 (5): 311-26 (1949)), it is ranked on a scale from 0 to 20. A HLB value of 1 refers to a very lipophilic substance. Compounds with an HLB value of 20 are very hydrophilic. Pure lipids with no emulsifying properties, like medium chain lengths triglycerides (MCT), have a HLB value of 0 (H.N. Prajapati et al. "A Comparative Evaluation of Mono-, Di- and Triglyceride of Medium Chain Fatty Acids by Lipid/Surfactant/Water Phase Diagram, Solubility Determination and Dispersion Testing for Application in Pharmaceutical Dosage Form Development", Pharm Res 29(1), pp 285-305 (2012)). The HLB value of glycerol esters is defined as HLB = 20*(1-S/A), with S as the saponification value of the ester and A as the acid value of the fatty acid used for the esterification.

The HLB values as defined in this description are according to the method of Griffin and Davis.

In a further embodiment, said oil is a vegetable oil. This would mean that the oil is an edible oil and that the coating composition containing this type of oil can be used for release of food products.

In a still further embodiment, said oil is rapeseed oil, soybean oil, high oleic sunflower oil or a mixture of one or more hereof. Hereby, it is to be understood that the term oil covers not only one type of oil but may be two, three, four, five etc. oils which are mixed to form the final oil of the coating composition.

Other examples of oils could be synthetic or natural triglycerides, such as high oleic soybean oil, sunflower oil, peanut oil, cottonseed oil, palm oil, olive oil or coconut oil, as well as fish oil, babassu oil or palmkernel oil.

Alternatively, the oil is not a vegetable oil but a natural or synthetic mineral oil such as paraffinic oils, naphthenic oils and aromatic oils, for example mixtures of liquid alkanes, petroleum, cyclohexane, toluene, essential oils or polyether.

Said emulsifier is present in an amount of 0.1-10 wt% of the coating composition. In a further embodiment, said emulsifier is present in an amount of 0.3-8 wt% of the coating composition. In a further embodiment, said emulsifier is present in an amount of 0.5-5 wt% of the coating composition.

In a further embodiment, a polymer surface being coated at least partly with a coating composition as described above is described. Hereby, it is to be understood that the coating composition as described herein is applied to a surface whereby the properties of the surface is modified. Thus, the release properties of the surface are changed. The coating composition is applied as described elsewhere herein.

This surface is a polymer surface. In a further embodiment, the surface is made from a composite material, a mixture of different materials for example a mixture of a polymer and glass fibers.

It is to be understood that "at least partly" means that when the polymer surface is coated with the coating composition the coating composition need not cover the entire surface. In some embodiments, the whole surface will be covered by the coating composition while in other embodiments, only a part of the surface is coated, for example 95% of the surface, 75% of the surface, 50% of the surface, 25% of the surface or 5% of the surface. The part of the surface coated by the coating composition is not limited to these examples.

Furthermore, it is to be understood that if the polymer surface is only partly coated with the coating composition it need not be coated in one selected area, but can be coated in multiple selected areas.

In one embodiment, the non-coated parts of the polymer surface may comprise negligible or trace amounts of the coating composition.

It has been found that applying coating solutions of at least one emulsifier and oils on polymer surfaces results in highly improved fluid release properties. The effect can be seen for different types of emulsifiers, such as glycerol and polyglycerol esters, and various oils.

In one embodiment, the coating is applied in an amount of 0.10 mg/cm² - 1.30 mg/cm². In a further embodiment, the coating is applied in an amount of 0.30 mg/cm² - 0.85 mg/cm².

By "at least one emulsifier" is to be understood that the coating composition can comprise one, two, three, four, five etc. different emulsifiers mixed in the coating composition.

By "at least one oil" is to be understood that the coating composition can comprise one, two, three, four, five etc. different types of oils mixed in the coating composition.

The polymer surface is coated with the coating composition by applying the coating composition to the surface. This can be performed by methods such as dip-coating or spray-coating but other methods known by the skilled person in the art can be used as well.

In one embodiment, the viscosity of the coating composition at 25°C is between 10 cP and 3,000 cP. In a further embodiment, the viscosity of the coating composition at 25°C is between 20 cP and 1000 cP. In a still further embodiment, the viscosity of the coating composition at 25°C is between 30 and 500 cP. In a still further embodiment, the viscosity of the coating composition at 25°C is between 50 cP and 500 cP. In a still further embodiment, the viscosity of the coating composition at 25 °C is between 50 cP and 100 cP.

In a further embodiment, said at least one emulsifier is a glycerol or polyglycerol ester. In a still further embodiment, said at least one emulsifier is selected from diglycerol esters, polyglycerol fatty acid esters (PGEs), citric acid ester of mono-diglycerides (CITREM), diacetyl tartaric ester of mono-diglycerides (DATEM) or a mixture of one or more hereof. In another embodiment, said at least one emulsifier is a monoglyceride or a mono-diglyceride of fatty acid esters.

Alternatively, said at least one emulsifier is esters of sorbitol, esters of sorbitan, esters of propanediol, amphiphilic polymers, ionic or non-ionic surfactants.

Examples of suitable PGEs are GRINDSTED® PGE 308 and GRINDSTED® PGE O 80.

The HLB-value of the emulsifier is above 5. In a still further embodiment, the HLB-value is in the range of 7 to 12.

In a further embodiment, said oil is a vegetable oil. In a still further embodiment, said oil is rapeseed oil, soybean oil, high oleic sunflower oil or a mixture of one or more hereof. Hereby, it is to be understood that the term 'oil' covers not only one type of oil but may be two, three, four, five etc. oils which are mixed to form the final oil of the coating composition.

Other examples of oils could be synthetic or natural triglycerides, such as high oleic soybean oil, sunflower oil, peanut oil, cottonseed oil, palm oil, olive oil or coconut oil, as well as fish oil, babassu oil or palmkernel oil.

Alternatively, the oil is not a vegetable oil but a natural or synthetic mineral oil such as paraffinic oils, naphthenic oils and aromatic oils, for example mixtures of liquid alkanes, petroleum, cyclohexane, toluene, essential oils or polyether.

Applying the at least one emulsifier in combination with the oil improves or enables the wettability of the surface. Thus, oils, which have a hydrophobicity that does not allow homogeneous wetting of the surface without at least one emulsifier are also applicable.

Said at least one emulsifier is present in an amount of 0.1-10 wt% of the coating composition. In a further embodiment, said at least one emulsifier is present in an amount of 0.3 - 8 wt% of the coating composition. In a still further embodiment, said at least one emulsifier is present in an amount of 0.5 - 5 wt% of the coating composition.

In a further embodiment, said polymer is polypropylene (PP) or polyethylene terephthalate (PET).

In a further embodiment, said polymer surface is part of a structure, said structure comprises an internal additive.

It is to be understood that the structure can be any type of object independent of the shape or form of the object as long as the structure comprises at least one polymer surface onto which the coating composition can be applied.

The internal additive is incorporated into the structure during production hereof. The internal additive is capable of migrating from inside the structure to the surface of the structure. This changes the surface properties and thus, the release properties of the surface. The release properties of the surface can hence be changed both by the internal additive and the coating composition.

In a further embodiment, the internal additive is a distilled monoglyceride, a mono-diglyceride, a diglycerol ester or a mixture of one or more hereof.

In a further embodiment, said internal additive constitute between 0.1 and 5 wt% of said structure. In a further embodiment, said internal additive constitute between 0.2 and 3 wt% of said structure. In a further embodiment, said internal additive constitute between 0.3 and 2 wt% of said structure. In a further embodiment, said internal additive constitute 0.5-1.5 wt% of said structure.

This invention further describes a polymer surface, where the surface is part of a structure and the structure comprises an internal additive and where said surface further is coated at least partly with a coating composition, where the coating composition consists of a homogeneous solution comprising substantially only one phase comprising at least one oil and at least one emulsifier, wherein the HLB-value of said emulsifier is above 5 and said emulsifier is present in an amount of 0.1-10 wt% of the coating composition, and wherein said polymer is a polyester or a polyolefin.

This invention further describes a container for holding a fluid comprising at least one inner surface, said inner surface being, in use, in contact with said fluid where said inner surface is a surface as described herein. Where "in use" is to be understood as when the fluid is contained in the container. Said inner surface is a polymer surface coated at least partly with a coating composition consisting of a homogenous solution comprising substantially only one phase comprising at least one oil and at least one emulsifier, wherein the HLB-value of said emulsifier is above 5 and said emulsifier is present in an amount of 0.1-10 wt% of the coating composition, and wherein said polymer is a polyester or a polyolefin.

The container can be any means which are capable of containing a fluid such as a flask, a bucket, a can, a jar, a bottle, a trough, a carton, a tube etc.

The container may have more inner surfaces depending on the type of container. By "inner surface" is to be understood a surface which comes into contact with the fluid when the fluid is contained in the container. The fluid need not be in contact with the entire inner surface or the entire inner surfaces but may be in contact with only a part hereof depending on how much fluid is in the container.

In one embodiment, the container comprises an outlet opening and a cavity, said outlet opening connects said cavity with the outside. The container is filled with the fluid and exits the container via the outlet opening. The cavity is surrounded by surfaces, which are at least partly coated with a coating composition as described elsewhere in the description.

When the fluid exits the container the coating composition helps the release of the fluid from the inner surface(s) of the container whereby less fluid adheres to the surface(s) and is retained in the container.

In one embodiment, said fluid is a food product. In a further embodiment, said food product is mayonnaise or concentrated and non-concentrated fermented products.

Concentrated and non-concentrated fermented products are products such as but not limited to yogurt and Ymer (a concentrated mesophilic product).

Examples of other products include but are not limited to mustard, ketchup, salad dressings, sandwich spreads, sauces, marinades, pastes, jams, honey, liquid margarine, liquid cheese and syrups.

In another embodiment, said fluid is a non-food product. In a further embodiment, said non-food product is a cream or lotion.

Examples of other products include but are not limited to paints, dyes, cosmetics, toothpaste, ointments, pharmaceuticals, polymer dispersions, pigment suspensions and adhesives. The fluid can for example be used for technical, medical and personal care applications, e.g. sports cream, sun lotion, etc.

In one embodiment, the viscosity of the fluid at 25°C is from 500-300,000 cP. In another embodiment, the viscosity of the fluid at 25°C is from 500-10,000 cP. In a further embodiment, the viscosity of the fluid at 25°C is from 10,000-200,000 cP. In a further embodiment, the viscosity of the fluid at 25°C is above 200,000 cP.

This invention further describes a method for forming a coating composition for coating a polymer surface as described herein, wherein the polymer is a polyester or a polyolefin, comprising the following steps:
a. mixing at least one oil and at least one emulsifier to form a coating composition consisting of a homogenous solution comprising substantially only one phase comprising at least one oil and at least one emulsifier, wherein the HLB-value of said emulsifier is above 5 and said emulsifier is present in an amount of 0.1-10 wt% of the coating composition;
b. contacting said polymer surface with said coating composition;
c. optionally, allowing excess coating composition to flow off said surface.

In order to obtain advantageous release properties of the coating composition, the coating composition comprising the at least one oil and the at least one emulsifier is mixed before application to form a homogenous solution comprising substantially only one phase. If they are not mixed before application a two layer coating composition will be formed comprising at least one oil and at least one emulsifier, respectively. This two-layer coating composition does not provide comparable good release properties.

By "contacting said polymer surface with the coating composition" is to be understood that the coating composition is applied to the surface by means commonly known to the skilled person in the art.

This invention further describes a use of a coating composition for improvement of release properties of a polymer surface by coating at least partly said surface with said coating composition consisting of a homogenous solution comprising substantially only one phase comprising at least one oil and at least one emulsifier, wherein the HLB-value of said emulsifier is above 5 and said emulsifier is present in an amount of 0.1-10 wt% of the coating composition, and wherein said polymer is a polyester or a polyolefin. Hereby, the release properties of the polymer surface are improved as compared to the release properties of a polymer surface without said coating composition.

In a further use, said at least one emulsifier is a glycerol or a polyglycerol ester. In a still further use, said at least one emulsifier is selected from polyglycerol fatty acid esters (PGEs), citric acid ester of mono-diglycerides (CITREM), diacetyl tartaric ester of mono-diglycerides (DATEM) or a mixture of one or more hereof. In another embodiment, said at least one emulsifier is a monoglyceride or a mono-diglyceride of fatty acid esters.

In a further use, the HLB-value of the emulsifier is in the range of 7 to 12.

In one use, the viscosity of the coating composition at 25°C is between 10 cP and 3000 cP. In a further use, the viscosity of the coating composition at 25°C is between 20 cP and 1000 cP. In a still further use, the viscosity of the coating composition at 25°C is between 100 cP and 800 cP. In a still further use, the viscosity of the coating composition at 25 °C is between 50 cP and 500 cP. In a still further use, the viscosity of the coating composition at 25 °C is between 50 cP and 100 cP.

In a further use, said oil is a vegetable oil. In a still further use, said oil is rapeseed oil, soybean oil, high oleic sunflower oil or a mixture of one or more hereof.

Said at least one emulsifier is present in an amount of 0.1-10 wt% of the coating composition. In a further use, said at least one emulsifier is present in an amount of 0.3-8 wt% of the coating composition. In a further use, said at least one emulsifier is present in an amount of 0.5-5 wt% of the coating composition.

In a further use, said surface is an inner surface forming a cavity in a container, where said cavity is connected to the outside with an outlet opening.

In a further use, said polymer is polypropylene (PP) or polyethylene terephthalate (PET).

In a further use, said surface is part of a structure, said structure comprises an internal additive. In a further use, said internal additive is distilled monoglyceride, a mono-diglyceride, a diglycerol ester or a mixture of one or more hereof.

In a further use, said fluid is a food product. In a still further use, said food product is mayonnaise or concentrated and non-concentrated fermented products. Concentrated and non-concentrated fermented products are products such as but not limited to yogurt and Ymer® (a concentrated mesophilic product).

In a further use, said fluid is a non-food product. In a still further use, said non-food product is cream or lotion.

### BRIEF DESCRIPTION OF THE DRAWINGS

- Figure 1a: illustrates retained mayonnaise on PET sheets modified with 1 wt% GRINDSTED® PGE 308 as an internal additive, and no coating;
- Figure 1b: illustrates retained mayonnaise on PET sheets modified with 1 wt% GRINDSTED® PGE 308 as an internal additive and coated with rapeseed oil;
- Figure 1c: illustrates retained mayonnaise on PET sheets modified with 1 wt% GRINDSTED® PGE 308 as an internal additive and coated with rapeseed oil + 1 wt% GRINDSTED® PGE 308;
- Figure 1d: illustrates retained mayonnaise on PET sheets modified with 1 wt% GRINDSTED® PGE 308 as an internal additive and coated with rapessed oil + 3 wt% GRINDSTED® PGE 308;
- Figure 2a: illustrates retained Ymer A38 on PET sheets with no internal additive, and no coating;
- Figure 2b: illustrates retained Ymer A38 on PET sheets with no internal additive and coated with rapeseed oil + 3 wt% GRINDSTED® PGE O 80;
- Figure 2c: illustrates retained Ymer A38 on PET sheets with 1% DIMODAN® HP as internal additive and no coating;
- Figure 2d: illustrates retained Ymer A38 on PET sheets with 1% DIMODAN® HP as internal additive and coated with rapeseed oil + 3 wt% GRINDSTED® PGE O 80;
- Figure 3: illustrates PET bottles after mayonnaise release: without coating (left) and with a coating of 3 wt% Citrem SP70 in rapeseed oil (right).
- Figure 4a: illustrates a PP bottle after mayonnaise release after 3 days of storage at 5°C without coating.
- Figure 4b: illustrates a PP bottle after mayonnaise release after 3 days of storage at 5°C with a coating of 3 wt% Citrem SP70 in rapeseed oil.

### EXAMPLES

### Methods

### Cast film samples

Cast film was produced on a Brabender lab scale extruder. The film was extruded through a slit die, cooled and drawn to its desired thickness on a Brabender Univex calendering system.
Amorphous polyethylene terephthalate (APET) cast film thickness: 300 - 400 µm.
Random polypropylene (PP) cast film thickness: 500 - 600 µm.

### Polymer film samples:

APET with no internal additive added
APET with 1.0% GRINDSTED® PGE 308 added
APET with 1.0% GRINDSTED® PS 101 added
APET with 1.0% DIMODAN® HP added
APET with 0.3% DIMODAN® HP added
APET with 1.0% DIMODAN® HR added
Random copolymer polypropylene (PP) with no internal additive added
Random PP with 1% GRINDSTED® PGE 308
Random PP with 0.3% DIMODAN® HP
Random PP with 1% DIMODAN® HP
Random PP with 3.0% DIMODAN® HP

### Cutting test specimens:

Test specimens were cut in 4x6 cm pieces on a paper cutting machine.

Test specimens were moved and handled with tweezers and only touched when wearing gloves.

Test specimens were weighed to an accuracy of +/- 0.1 mg prior to submerging in coating and/or product.

### Coating of polymer test specimens

The 4x6 polymer specimens were completely immersed in the coating solution contained in a 100 ml lab glass container. The specimens were handled with tweezers during the entire coating process. After removing the specimens from the coating solution, excessive coating material was allowed to run off by placing the specimens vertically for 30 minutes. Specimens were then weighed and the amount of coating determined. The coated specimens were then ready to be submerged in the product (e.g. mayonnaise).

### Coatings evaluated:

100% rapeseed oil
100% high oleic sunflower oil
100% olive oil
100% grapeseed oil
Medium chain triglyceride (MCT)
Rapeseed oil with 1% GRINDSTED® PGE 308 added
Rapeseed oil with 3% GRINDSTED® PGE 308 added
Rapeseed oil with 1% GRINDSTED® PGE O 80 added
Rapeseed oil with 3% GRINDSTED® PGE O 80 added
Rapeseed oil with 0.2% CITREM SP70 added
Rapeseed oil with 0.5% CITREM SP70 added
Rapeseed oil with 3% CITREM SP70 added
Rapeseed oil with 6% CITREM SP70 added
Rapeseed oil with 10% CITREM SP70 added
Rapeseed oil with 3% PANODAN® AB added
Rapeseed oil with 3% PANODAN® Visco-Lo added
Rapeseed oil with 3% PGPR added
Rapeseed oil with 3% Lecithin added
High oleic sunflower oil with 3% PGE 080 added
High oleic sunflower oil with 3% Citrem SP 70 added
High oleic sunflower oil with 3% Panodan AB 100 added
Olive Oil with 3% Citrem SP 70
Grapeseed oil with 3% Citrem SP 70
MCT with 3% PGE 308

### Test container:

Small 150 ml buckets made from high-density polyethylene (HDPE) and with a low-density polyethylene (LDPE) lid. The product e.g. mayonnaise was transferred to a test container with a spoon and was levelled with the top of the container. Each container could hold three fully submerged test specimens.

### Immersion of test specimens in the product

The product was stirred to a homogeneous mixture and levelled with the top of the container prior to immersion of test specimens.

The test specimens cut from the cast film was immersed in the product and was completely covered.

The lid was put on the container and it was stored at 5°C for one day to 56 days.

All samples were determined in triplicates. The results in the tables are average values of the three measurements.

### Retrieving test specimens from product:

After storage, test specimens were removed from the test container with tweezers and weighed to an accuracy of +/- 0.1 mg.

The weight of the retained product was calculated.

### Weight of test specimens:

All polymer specimens cut in a 4x6 cm size were weighed with an accuracy of +/-0.1 mg.

All coated specimens were weighed with an accuracy of +/- 0.1 mg and total weight of coating was calculated and recorded.

All specimens were weighed after they were retrieved from the product test container and weighed after the product was no longer dripping off the specimen when held in a vertical position, which typically occurs within one minute.

Total amount of product was calculated from weight measurements and results were recorded and used to evaluate efficiency of the coating.

### Measurement of viscosity

The viscosity data were obtained at 25°C at a shear rate of 10/s using an Anton Paar MCR301 rotational rheometer.

**Description of applied oils, internal additives and emulsifiers**

| **Components** | **Description** |
|---|---|
| Rapeseed oil | Oil derived from rapeeeds |
| MCT 60 X (MCT) | Glyceryl Tricaprylate-caprate derived from palm oil |
| High oleic sunflower oil | Oil derived from sunflower seeds with high oleic acid content |
| Olive oil | Oil derived from olives |
| Grapeseed oil | Oil derived from seeds from grapes |
| GRINDSTED® PGE 308 (PGE 308) | Polyglycerol ester (PGE) |
| GRINDSTED® PGE 080 (PGE 080) | Polyglycerol ester (PGE) |
| Citrem SP70 | Citric acid ester of mono-diglyceride (CITREM) |
| PANODAN® AB | Diacetyl tartaric ester of mono-diglycerides (DATEM) |
| PANODAN® Visco-Lo | Diacetyl tartaric ester of mono-diglycerides (DATEM) |
| Polyglycerol polyricinoleate (PGPR) | Polyglycerol ester of polycondensed fatty acids from castor oil |
| DIMODAN® HP | Distilled monoglyceride from hydrogenated palm oil |
| DIMODAN® HR | Distilled monoglyceride from hydrogenated rapeseed oil |

### Release studies from polymer bottles

In addition to the experiments with cast film polymer samples, food release from polymer bottles was tested. Two different bottle types were prepared: PP bottles with a volume of 450 ml and PET bottles with a volume of 175 ml.

Uncoated and coated polymer bottles were filled with a 80 wt% fat containing, oil-in-water mayonnaise formulation. For PP, the bottles were either uncoated or coated with rapeseed oil containing 3 wt% of Citrem SP70. For PET, the bottles were either uncoated, coated with rapeseed oil alone or rapeseed oil containing 3 wt% Citrem SP70.

The coating liquids were applied by rinsing the bottles with the coating liquid and removing any excess liquid by turning the bottles upside down and allowing the liquid to flow freely from the bottles. Hereafter, the bottles were completely filled with mayonnaise and stored at 5°C.

The PET bottles were stored for 22 days, while the PP bottles were stored for 3, 14, 35 and 56 days. The mayonnaise was released from the bottles by turning the bottles upside down and allowing the mayonnaise to flow freely from the bottle. The bottles were turned for 2h at 25°C, followed by 12 cycles of taping and mechanical squeezing. The residual amounts of mayonnaise were determined by the weight differences before and after filling and releasing the mayonnaise.

### Results

### Example 1: Product release properties of mayonnaise from PET surfaces

PET surfaces were coated with a multiplicity of coating compositions as described in Table 1-4.

As can be seen from the tables, the addition of a coating to the surface of the samples highly increased the amount of product released from the surface as compared to where no coating was added.

Furthermore it can be seen that the results are dependent upon the type of coating applied to the surface.

In addition it can be seen from Table 1 that adding only 1% of an emulsifier to the oil before coating the surface with the coating composition results in further 78% of the remaining product to be removed from the surface as compared to a pure oil coating. This is even further increased to 89% if the amount of emulsifier is increased to 3% of the coating composition.

**Table 1: APET cast film samples without internal additive tested with mayonnaise (80% fat content) after 1 day.**

| **Coating composition in wt%** | **Remaining product in wt%** | **Improvement compared to no coating in %** | **Improvement compared to rapeseed oil coating in %** |
|---|---|---|---|
| No coating | 6.8 | 0 | |
| 100% rapeseed oil | 1.8 | 74 | 0 |
| 1% PGE308 in rapeseed oil | 0.4 | 94 | 78 |
| 3% PGE308 in rapeseed oil | 0.2 | 97 | 89 |

**Table 2: APET cast film samples without internal additive tested with mayonnaise (80% fat content) after 3 days.**

| **Coating composition in wt%** | **Remaining product in wt%** | **Improvement compared to no coating in %** |
|---|---|---|
| No coating | 7.5 | 0 |
| 100% rapeseed oil | 1.8 | 76 |
| 3% Lecithin in rapeseed oil | 0.6 | 92 |
| 3% Citrem SP70 in rapeseed oil | 0.2 | 97 |

**Table 3: APET cast film samples without internal additive tested with mayonnaise (80% fat content) after 3 days.**

| **Coating composition in wt%** | **Remaining product in wt%** | **Improvement compared to no coating in %** |
|---|---|---|
| No coating | 7.5 | 0 |
| 100% MCT | 1.8 | 76 |
| 3% PANODAN® AB in rapeseed oil | 0.6 | 90 |
| 3% PANODAN® Visco-Lo in rapeseed oil | 0.8 | 86 |

**Table 4: APET cast film samples without internal additive tested with mayonnaise (80% fat content) after 3 days.**

| **Coating composition in wt%** | **Remaining product in wt%** | **Improvement compared to no coating in %** |
|---|---|---|
| No coating | 6.1 | 0 |
| 3%PGPR in Rapeseed oil | 1.0 | 84 |
| Water/rapeseed oil/ PGPR (60/36/4) | 1.3 | 79 |
| 3% PGE 080 in high oleic sunflower oil | 0.2 | 97 |

### Example 2: Product release properties of mayonnaise from PET surfaces comprising internal additives

PET samples were modified with additives and submerged into mayonnaise. After three days, the polymer sheets (test specimens) were removed from the mayonnaise to determine the remaining amount mayonnaise on the sheets.

Without coating, the release properties for mayonnaise can be improved by an internal additive (DIMODAN® HP) by 43% (see Table 5). However, applying rapeseed oil as an external coating enables even better release properties of about 64% less product with and without internal additive (compared to the uncoated reference with no internal additive). Surprisingly adding only 1 wt% or 3 wt% surface active additive (GRINDSTED® PGE 308) to rapeseed oil leads to further improvement of release properties of up to 97% improvement (only 0.2 wt% product left on the polymer sheet, compared to 5.8 wt% for non-modified PET, see Table 5).

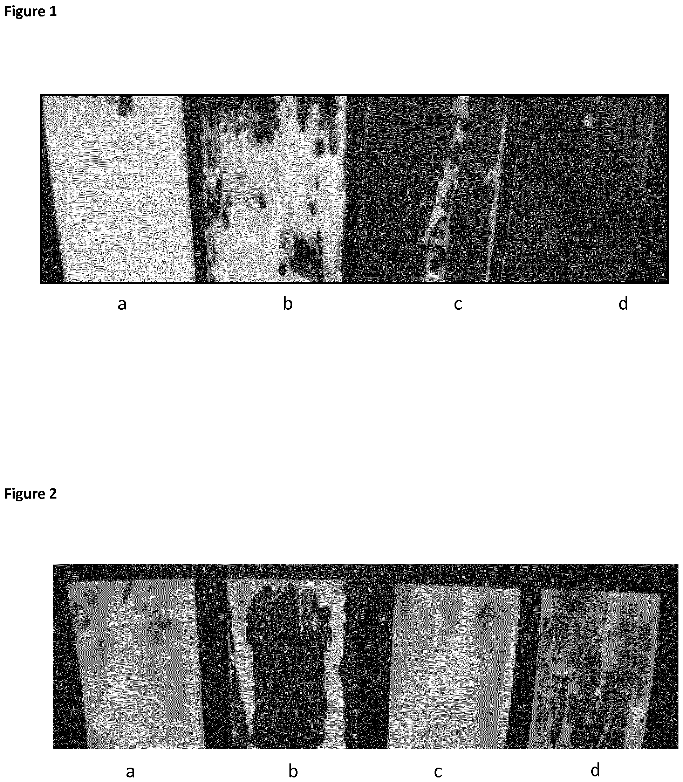

Figure 1 illustrates comparable PET samples directly after removal from the mayonnaise. The samples were all modified with 1wt% of GRINDSTED® PGE 308 as an internal additive. Figure 1a illustrates a sample with no coating setting the threshold for release of mayonnaise from the surface. Figure 1b illustrates a sample coated with rapeseed oil only (RS) showing an additional product release compared to the non-coated sample of 71%. Figure 1c illustrates a sample coated with rapeseed oil + 1wt% GRINDSTED® PGE 308 showing an additional product release compared to the non-coated sample of 93%. Figure 1d illustrates a sample coated with rapeseed oil + 3wt% GRINDSTED® PGE 308 showing an additional product release compared to the non-coated sample of 97%.

Though the increase in viscosity by adding 1 wt% or 3 wt% of GRINDSTED® PGE 308 to rapeseed oil is marginal (1.3%, respectively 5.8%), the increase of the adhesion of the coating solution itself is highly increased compared to rapeseed oil only (2.3 - 3.1 wt% compared to 1.2 - 1.4 wt%). This indicates that the adhesion of the coating solution to the polymer surface is mainly increased by the change in interfacial energies and improved wetting, rather than an increase in viscosity of the coating solutions.

**Table 5: APET cast film samples with internal additive tested with mayonnaise (80% fat content)**

| **Coating composition in wt%** | **Internal additive in wt%** | **Storage time days** | **Remaining product in wt%** | **Improvement in %*** | **Improvement compared to no coating in %** | **Improvement compared to oil coating in %** |
|---|---|---|---|---|---|---|
| No coating | No additive | | 5.8 | 0 | | |
| No coating | 1% DIMODAN® HP | 1 | 3.3 | 43 | 0.0 | |
| 100% rapeseed oil | 1% DIMODAN® HP | 1 | 2.1 | 64 | 36 | 0.0 |
| 1% PGE 308 in rapeseed oil | 1% DIMODAN® HP | 1 | 0.7 | 88 | 79 | 67 |
| 3% PGE 308 in rapeseed oil | 1% DIMODAN® HP | 1 | 0.3 | 95 | 91 | 86 |
| No coating | 1% GRINDSTED® PGE 308 | 1 | 7.0 | -21 | 0 | |
| 100% rapeseed oil | 1% GRINDSTED® PGE 308 | 1 | 2.0 | 66 | 71 | 0.0 |
| 1% PGE 308 in rapeseed oil | 1% GRINDSTED® PGE 308 | 1 | 0.5 | 91 | 93 | 75 |
| 3% PGE 308 in rapeseed oil | 1% GRINDSTED® PGE 308 | 1 | 0.2 | 97 | 97 | 90 |
| No coating | 1% GRINDSTED® PS101 | 1 | 6.7 | -16 | 0 | |
| 100% rapeseed oil | 1% GRINDSTED® PS101 | 1 | 1.3 | 78 | 81 | 0 |
| 1% PGE 308 in rapeseed oil | 1% GRINDSTED® PS101 | 1 | 0.5 | 91 | 93 | 62 |
| 3% PGE 308 in rapeseed oil | 1% GRINDSTED® PS101 | 1 | 0.2 | 97 | 97 | 85 |
| No coating | 1% DIMODAN® HR | 1 | 4.1 | 29 | 0 | |
| 100% rapeseed oil | 1% DIMODAN® HR | 1 | 2.0 | 66 | 51 | 0 |
| 1% PGE 308 in rapeseed oil | 1% DIMODAN® HR | 1 | 0.6 | 90 | 86 | 70 |
| 3% PGE 308 in rapeseed oil | 1% DIMODAN® HR | 1 | 0.3 | 95 | 93 | 85 |
| 100% rapeseed oil | 1% DIMODAN® HR | 2 | 2.9 | 50 | | 0 |
| 1% PGE 308 in rapeseed oil | 1% DIMODAN® HR | 2 | 0.4 | 93 | | 86 |
| 3% PGE O 80 in rapeseed oil | 1% DIMODAN® HR | 2 | 0.4 | 93 | | 86 |

| | | | | | | |
|---|---|---|---|---|---|---|
| *in relation to a surface having no coating and no internal additive | | | | | | |

Furthermore from Table 5 it can be observed that adding an emulsifier to the coating composition increases the release of product from the surface with 67-90% as compared to a coating composition without emulsifier.

### Example 3: Product release properties of Ymer A38 from PET surfaces

Ymer A38 is a sour milk-based, yogurt-like dairy product (a concentrated mesophilic product) similar to yogurt. The PET samples were modified with additives and submerged into the Ymer. After three days at 5°C the polymer sheets (test specimens) were removed from the product and the remaining amount of product (Ymer A38) on the polymer sheets were determined.

In case of Ymer A38, and in contrast to Example 1, the use of internal additive only is not improving the product release properties. However, applying a coating solution of rapeseed oil containing 3 wt% GRINDSTED® PGE O 80 leads to an improvement of product release of 75% (i.e. 75 wt% less product left on the polymer compared to the reference without additives). An improvement is also observed for the sample without 1 wt% DIMODAN® HP as internal additive (Table 6).

**Table 6: APET cast film samples with and without internal additive tested with Ymer A38 after 3 days**

| **Coating composition in wt%** | **Internal additive in wt%** | **Remaining product in wt%** | **Improvement in %*** |
|---|---|---|---|
| No coating | No additive | 2.8 | 0 |
| No coating | 1% DIMODAN® HP | 2.9 | -3.6 |
| 3% PGE 308 in rapeseed oil | No additive | 0.9 | 68 |
| 3% PGE O 80 in rapeseed oil | 1% DIMODAN® HP | 0,7 | 75 |

| | | | |
|---|---|---|---|
| *in relation to a surface having no coating and no internal additive | | | |

Figure 2 illustrates comparable PET samples directly after removal from the Ymer A38. Figure 2a illustrates a sample with no coating and no internal additive setting the threshold for release of Ymer A38 from the surface. Figure 2b illustrates a sample coated with rapeseed oil + 3 wt% GRINDSTED® PGE O 80 and with no internal additive. This sample showed an additional product release compared to the non-coated sample of 68%. Figure 2c illustrates a sample with no coating but with 1% DIMODAN® HP as internal additive. This sample showed an additional product release compared to the non-coated sample of -3.6%. Figure 2d illustrates a sample coated with rapeseed oil + 3 wt% GRINDSTED® PGE O 80 with 1% DIMODAN® HP as internal additive. This sample showed an additional product release compared to the non-coated sample of 75%.

### Example 4: Product release properties of sun lotion from PET surfaces

The described approach is not limited to food release and food packaging, but can be applied also for any other viscous fluids. For instance, the improved release of sun lotion has been demonstrated for PET samples modified with additives.

The use of 1 wt% DIMODAN® HP as internal additive without additional coating improves the release of sun lotion by about 13% (13% less product left on the polymer surface compared to the reference without any internal or external additive). Applying a coating solution of rapeseed oil containing 3 wt% GRINDSTED® PGE O 80, results in an even higher improvement of about 33% (Table 7).

**Table 7: APET cast film samples with and without internal additive tested with Sun Lotion (after 3 days)**

| **Coating composition in wt%** | **Internal additive in wt%** | **Remaining product in wt%** | **Improvement in %*** |
|---|---|---|---|
| No coating | No additive | 6.4 | 0 |
| No coating | 1% DIMODAN® HP | 5.6 | 13 |
| 3% PGE O 80 in rapeseed oil | No additive | 4.5 | 30 |
| 3% PGE 308 in rapeseed oil | No additive | 4.2 | 34 |
| 3% PGE O 80 in rapeseed oil | 1% DIMODAN® HP | 4.2 | 34 |
| 3% PGE 308 in rapeseed oil | 1% DIMODAN® HP | 4.4 | 31 |

| | | | |
|---|---|---|---|
| *in relation to a surface having no coating and no internal additive | | | |

Though the effect in this example is not as pronounced as *e.g.* in the case of mayonnaise it is noteworthy, taking the commercial value of the product into account. In this respect the added value of the demonstrated product release solution can still be of a similar magnitude.

### Example 5: Product release properties of mayonnaise from PP cast film surfaces

The described approach is not limited to PET as a polymer, but can be applied also for other surfaces. In the following the release of mayonnaise is demonstrated for random PP samples modified with internal additives and different coating compositions.

As shown in Table 8-11 the use of internal additive could improve the mayonnaise release properties, but it could also increase the remaining amount of product on the polymer (*e.g.* when applying 1 wt% DIMODAN® HR as an internal additive). The use of oils as coating composition highly improved the release of mayonnaise in all cases, with and without internal additive. The product release properties of medium chain triglycerides (MCT) were better than for rapeseed oil alone (Table 9 and Table 10). However, using coating solutions of rapeseed oil containing 3 wt% GRINDSTED® PGE O 80 resulted in a step change performance, even compared to MCT, and improved release properties of up to 97% (see Table 11).

**Table 8: Random PP cast film samples without internal additive and mayonnaise (80% fat content) after 1 day**

| **Coating composition in wt%** | **Remaining product in wt%** | **Improvement compared to no coating in %** | **Improvement compared to oil coating in %** | **Viscosity** |
|---|---|---|---|---|
| No coating | 6.6 | 0 | | |
| 100% rapeseed oil | 2.7 | 59 | 0 | 71 cP |
| 1% PGE O 80 in rapeseed oil | 1.5 | 77 | 44 | 72 cP |
| 3% PGE O 80 in Rapeseed oil | 0.7 | 89 | 74 | 75 cP |

Table 8 show improved release properties with increasing viscosities. Compared to a coating with rapeseed oil only (71cP viscosity), the release properties for a coating with additional 1 wt% or 3 wt% GRINDSTED PGE O 80 are improved by 44% and 74% despite the increase in viscosity to 72cP and 75cP, respectively.

**Table 9: Random PP cast film samples with internal additive and mayonnaise (80% fat content) after 1 day**

| **Coating composition in wt%** | **Internal additive** | **Remaining product in wt%** | **Improvement compared to no coating in %** |
|---|---|---|---|
| No coating | 1% PGE 308 | 3.3 | 0 |
| 100% rapeseed oil | 1% PGE 308 | 2.9 | 12 |
| 100% MCT | 1% PGE 308 | 1.1 | 67 |

**Table 10: Random PP cast film samples with internal additive and mayonnaise (80% fat content) after 1 day**

| **Coating composition in wt%** | **Internal additive** | **Remaining product in wt%** | **Improvement compared to no coating in %** |
|---|---|---|---|
| No coating | 1% DIMODAN® HP | 7.5 | 0 |
| 100% rapeseed oil | 1% DIMODAN® HP | 3.6 | 52 |
| 100% MCT | 1% DIMODAN® HP | 1.6 | 79 |

**Table 11: Random PP cast film samples with internal additive and mayonnaise (80% fat content) after 1 day**

| **Coating composition in wt%** | **Internal additive** | **Remaining product in wt%** | **Improvement compared to no coating in %** | **Improvement compared to oil coating in %** |
|---|---|---|---|---|
| No coating | 1% DIMODAN® HR | 9.9 | 0 | |
| 100% rapeseed oil | 1% DIMODAN® HR | 1.2 | 88 | 0 |
| 1% PGE 308 in rapeseed oil | 1% DIMODAN® HR | 0.7 | 93 | 42 |
| 3% PGE O 80 in rapeseed oil | 1% DIMODAN® HR | 0.3 | 97 | 75 |

### Example 6: Long-term performance testing of coated PET and PP cast film samples (over 2 months storage time at 5°C)

Long-term tests confirmed the improved product release properties of rapeseed oil coatings containing 3 wt% of GRINDSTED PGE 080 or CITREM SP-70 compared to MCT coatings. The coated cast film polymer samples of PET (Table12) and PP (Table 13) have been stored in mayonnaise at 5°C up to 2 months. After 3, 14, 28 and 56 days the polymer samples have been removed and the remaining amount of mayonnaise determined.

**Table 12: Long-term release study of mayonnaise from coated PET cast film samples after 3, 12, 28 and 56 days storage.**

| **Coating composition in wt%** | **days of storage at 5°C** | **Remaining product in wt%** | **Improvement compared to no coating in %** | **Improvement compared to MCT coating in %** |
|---|---|---|---|---|
| No coating | 3 | 8.2 | 0 | |
| | 14 | 5.9 | 0 | |
| | 28 | 6.3 | 0 | |
| | 56 | 4.3 | 0 | |
| 100% MCT | 3 | 1.6 | 80 | 0 |
| | 14 | 1.6 | 73 | 0 |
| | 28 | 2.2 | 65 | 0 |
| | 56 | 2.0 | 53 | 0 |
| 3% PGE O 80 in rapeseed oil | 3 | 1.0 | 87 | 38 |
| | 14 | 1.4 | 77 | 13 |
| | 28 | 1.3 | 80 | 41 |
| | 56 | 0.6 | 86 | 70 |
| 3% Citrem SP70 in rapeseed oil | 3 | 0.4 | 95 | 75 |
| | 14 | 0.5 | 92 | 69 |
| | 28 | 0.4 | 94 | 82 |
| | 56 | 0.3 | 94 | 85 |

For PET, which has a higher polarity compared to polyolefins, the emulsifier containing coatings showed a very stable performance over the tested period of time.

In contrast, the food release effect of MCT as a coating is not only significantly lower from the beginning, but also much faster diminishing during the storage of the specimen. For instance, after 2 month a coating of rapeseed oil containing 3 wt% Citrem SP70 is performing 85% better than a coating with MCT for PET, and 78% better than MCT for PP.

**Table 13: Long-term release study of mayonnaise from coated PP cast film samples after 3, 12, 28 and 56 days storage.**

| **Coating composition in wt%** | **days of storage at 5°C** | **Remaining product in wt%** | **Improvement compared to no coating in %** | **Improvement compared to MCT coating in %** |
|---|---|---|---|---|
| No coating | 3 | 8.1 | 0 | |
| | 14 | 6.0 | 0 | |
| | 28 | 5.7 | 0 | |
| | 56 | 4.6 | 0 | |
| 100% MCT | 3 | 2.5 | 70 | 0 |
| | 14 | 2.1 | 65 | 0 |
| | 28 | 2.2 | 61 | 0 |
| | 56 | 1.3 | 71 | 0 |
| 3% PGE O 80 in rapeseed oil | 3 | 1.4 | 83 | 44 |
| | 14 | 1.8 | 70 | 14 |
| | 28 | 1.2 | 78 | 45 |
| | 56 | 0.6 | 86 | 54 |
| 3% Citrem SP70 in rapeseed oil | 3 | 0.3 | 96 | 88 |
| | 14 | 0.4 | 93 | 81 |
| | 28 | 0.3 | 94 | 86 |
| | 56 | 0.3 | 94 | 78 |

### Experiment 7: Release studies from polymer bottles

**Table 14: Product release of mayonnaise from PET bottles after 22 days storage at 5°C.**

| **Coating composition in wt%** | **Remaining product in wt%** | **Improvement compared to no coating in %** | **Improvement compared to oil coating in %** |
|---|---|---|---|
| No coating | 39 | 0 | |
| 100% rapeseed oil | 18 | 54 | 0 |
| 3% Citrem SP70 in rapeseed oil | 6 | 85 | 67 |

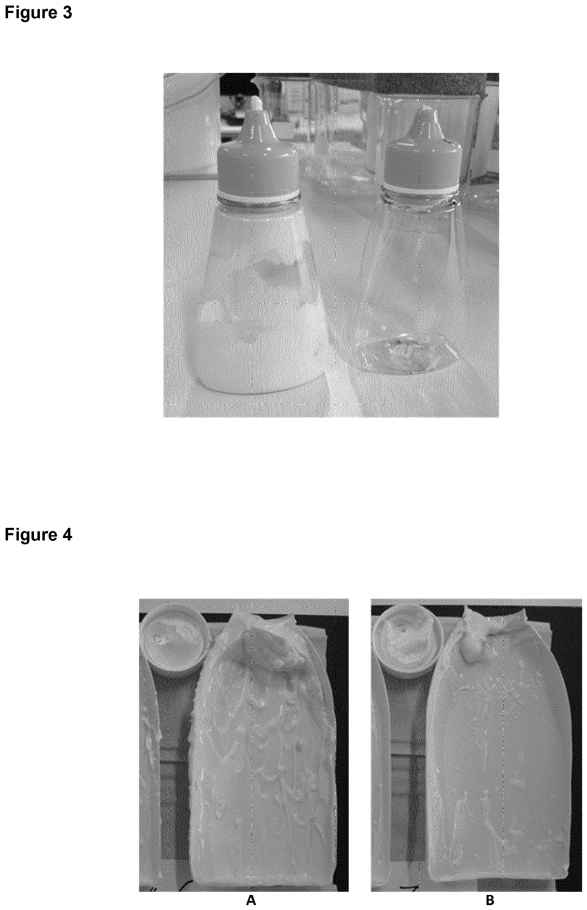

Figure 3 shows the comparison of the two PET bottles with no coating (left) and with a coating of 3 wt% Citrem SP70 in rapeseed oil (right). In the latter case the remaining mayonnaise is mainly located in the bottle opening (for geometrical reasons), while only marginal amounts are left at the bottle wall. This is also illustrated in Table 14, where the remaining product is reduced by 67% by adding 3% Citrem SP70 to the rapeseed oil before coating the surface.

**Table 15: Product release of mayonnaise from PP bottles after 3, 14, 35 and 56 days of storage at 5°C.**

| **Coating composition in wt%** | **days of storage at 5°C** | **Remaining product in wt%** | **Improvement compared to no coating in %** |
|---|---|---|---|
| No coating | 3 | 21 | 0 |
| | 14 | 22 | 0 |
| | 35 | 17 | 0 |
| | 56 | 22 | 0 |
| 3% Citrem SP70 in rapeseed oil | 3 | 7 | 67 |
| | 14 | 7 | 68 |
| | 35 | 9 | 47 |
| | 56 | 9 | 59 |

Figures 4a and 4b show the comparison of the two PP bottles with no coating (figure 4a) and with a coating of 3 wt% Citrem SP70 in rapeseed oil (figure 4b). The remaining mayonnaise is mainly located in the neck of the bottle and in the bottle's cap. The wall of the coated bottle is mostly free of any remaining mayonnaise, while the uncoated bottle retains significantly larger amount. This is also described in Table 15 where the remaining product is reduced between 47 and 68% when coating with rapeseed oil and 3% Citrem SP70 as compared to the bottles without coating.

### Experiment 8: Coating of APET cast film samples with rapeseed oil and Citrem SP 70

**Table 16: APET cast film samples without internal additive tested with mayonnaise (80% fat content) after 3 days.**

| **Coating composition in wt%** | **Remaining product in wt%** | **Improvement compared to no coating in %** | **Improvement compared to oil coating in %** |
|---|---|---|---|
| No coating | 7.8 | 0 | |
| 100% rapeseed oil | 3.1 | 60 | 0 |
| 0.2% Citrem SP 70 in rapeseed oil | 1.7 | 78 | 45 |
| 0.5% Citrem SP 70 in rapeseed oil | 1.0 | 88 | 68 |

**Table 17: APET cast film samples without internal additive tested with mayonnaise (80% fat content) after 14 days.**

| **Coating composition in wt%** | **Remaining product in wt%** | **Improvement compared to no coating in %** | **Improvement compared to oil coating in %** |
|---|---|---|---|
| No coating | 5.4 | 0 | |
| 100% rapeseed oil | 2.0 | 62 | 0 |
| 0.2% Citrem SP 70 in rapeseed oil | 1.3 | 77 | 35 |
| 0.5% Citrem SP 70 in rapeseed oil | 0.8 | 84 | 60 |

As shown in Tables 16 and 17 even relatively low amounts i.e. 0.2% and 0.5% of Citrem SP70 increases the release properties of a rapeseed oil coating between 35 and 68%. From the experiments it can be seen that this effect is kept even after 14 days of storage.

### Experiment 9: Coating of APET cast film samples with high oleic sunflower oil and 3% emulsifier

**Table 18: APET cast film samples without internal additive tested with mayonnaise (80% fat content) after 3 days.**

| **Coating composition in wt%** | **Remaining product in wt%** | **Improvement compared to no coating in %** | **Improvement compared to oil coating in %** |
|---|---|---|---|
| No coating | 8.1 | 0 | |
| 100% high oleic sunflower oil | 1.8 | 78 | 0 |
| 3% Citrem SP 70 in high oleic sunflower oil | 0.3 | 96 | 83 |
| 3% Panodan AB 100 in high oleic sunflower oil | 0.5 | 94 | 72 |

**Table 19: APET cast film samples without internal additive tested with mayonnaise (80% fat content) after 14 days.**

| **Coating composition in wt%** | **Remaining product in wt%** | **Improvement compared to no coating in %** | **Improvement compared to oil coating in %** |
|---|---|---|---|
| No coating | 6.9 | 0 | |
| 100% high oleic sunflower oil | 1.8 | 75 | 0 |
| 3% Citrem SP 70 in high oleic sunflower oil | 0.4 | 95 | 78 |
| 3% Panodan AB 100 in high oleic sunflower oil | 0.3 | 96 | 83 |

As shown in Tables 18 and 19 the release effect of the emulsifier is not only observed in rapeseed oil but also in oleic sunflower oil. Addition of 3% Citrem SP 70 or 3% Panodan AB 100 both increased the release efficiency of the high oleic sunflower oil by 72-83%. Furthermore, it is shown that this effect is kept even after 14 days of storage.

### Experiment 10: Coating of APET with olive oil or grapeseed oil and Citrem SP 70

**Table 20: APET cast film samples without internal additive tested with mayonnaise (80% fat content) after 3 days.**

| **Coating composition in wt%** | **Remaining product in wt%** | **Improvement compared to no coating in %** | **Improvement compared to oil coating in %** |
|---|---|---|---|
| No coating | 8.1 | 0 | |
| 100% olive oil | 2.9 | 64 | 0 |
| 3% Citrem SP 70 in olive oil | 0.5 | 94 | 83 |
| 100% grapeseed oil | 1.9 | 77 | 0 |
| 3% Citrem SP 70 in grapeseed oil | 0.4 | 95 | 79 |

**Table 21: APET cast film samples without internal additive tested with mayonnaise (80% fat content) after 14 days.**

| **Coating composition in wt%** | **Remaining product in wt%** | **Improvement compared to no coating in %** | **Improvement compared to oil coating in %** |
|---|---|---|---|
| No coating | 6.2 | 0 | |
| 100% olive oil | 1.7 | 72 | 0 |
| 3% Citrem SP 70 in olive oil | 0.4 | 94 | 76 |
| 100% grapeseed oil | 1.2 | 81 | 0 |
| 3% Citrem SP 70 in grapeseed oil | 0.4 | 94 | 67 |

As shown in Tables 20 and 21 the release effect is not only observed in rapeseed oil but also in olive oil and grapeseed oil. The release effect is further improved when adding emulsifier in the form of 3% Citrem SP 70 to the oil before coating increasing the effect of the coating with 76% and 67%, respectively as compared with oil alone. Furthermore, it is shown that this effect is kept even after 14 days of storage.

### Experiment 11: Coating of random PP with rapeseed oil and Citrem SP 70

**Table 22: PP cast film samples with 0.3 wt% Dimodan HP as internal additive, tested with mayonnaise (80% fat content) after 3 days.**

| **Coating composition in wt%** | **Remaining product in wt%** | **Improvement compared to no coating in %** | **Improvement compared to oil coating in %** |
|---|---|---|---|
| No coating | 6.7 | 0 | |
| 100% rapeseed oil | 3.3 | 51 | 0 |
| 3% Citrem SP 70 in rapeseed oil | 0.3 | 96 | 91 |

**Table 23: PP cast film samples with 0.3 wt% Dimodan HP as internal additive, tested with mayonnaise (80% fat content) after 14 days.**

| **Coating composition in wt%** | **Remaining product in wt%** | **Improvement compared to no coating in %** | **Improvement compared to oil coating in %** |
|---|---|---|---|
| No coating | 5.5 | 0 | |
| 100% rapeseed oil | 2.1 | 61 | 0 |
| 3% Citrem SP 70 in rapeseed oil | 0.2 | 96 | 90 |

**Table 24: PP cast film samples with 3.0 wt% Dimodan HP as internal additive, tested with mayonnaise (80% fat content) after 3 days.**

| **Coating composition in wt%** | **Remaining product in wt%** | **Improvement compared to no coating in %** | **Improvement compared to oil coating in %** |
|---|---|---|---|
| No coating | 7.7 | 0 | |
| 100% rapeseed oil | 2.5 | 68 | 0 |
| 3% Citrem SP 70 in rapeseed oil | 0.5 | 94 | 80 |

**Table 25: PP cast film samples with 3.0 wt% Dimodan HP as internal additive, tested with mayonnaise (80% fat content) after 14 days.**

| **Coating composition in wt%** | **Remaining product in wt%** | **Improvement compared to no coating in %** | **Improvement compared to oil coating in %** |
|---|---|---|---|
| No coating | 7.7 | 0 | |
| 100% rapeseed oil | 2.0 | 74 | 0 |
| 3% Citrem SP 70 in rapeseed oil | 0.4 | 95 | 80 |

As shown in Tables 22-25, the release effect of the coating is observed when using internal additive both for a relative high and a relative low amount of internal additive. The release effect is further improved when adding emulsifier in the form of 3% Citrem SP 70 to the oil before coating increasing the effect of the coating with 80%-90% as compared with oil alone. Furthermore, it is shown that this effect is kept even after 14 days of storage.

### Experiment 12: Coating of APET with rapeseed oil and Citrem LR 10

**Table 26: APET cast film samples without internal additive tested with mayonnaise (80% fat content) after 3 days.**

| **Coating composition in wt%** | **Remaining product in wt%** | **Improvement compared to no coating in %** |
|---|---|---|
| No coating | 8.4 | 0 |
| 3% Citrem LR 10 in rapeseed oil | 0.5 | 94 |
| 6% Citrem LR 10 in rapeseed oil | 0.4 | 95 |
| 10% Citrem LR 10 in rapeseed oil | 0.4 | 95 |

As shown in Table 26 the release effect is observed in rapeseed oil having 3%, 6% and 10% Citrem LR10. The addition of emulsifier show substantially the same release effect for the different concentrations of emulsifier i.e. 94-95% as compared with no coating.

### Experiment 13: Coating of APET cast film samples with MCT and PGE 308

**Table 27: APET cast film samples without internal additive tested with mayonnaise (80% fat content) after 3 days.**

| **Coating composition in wt%** | **Remaining product in wt%** | **Improvement compared to no coating in %** | **Improvement compared to oil coating in %** |
|---|---|---|---|
| No coating | 8.4 | 0 | |
| 100% MCT | 1.8 | 78 | 0 |
| 3% PGE 308 in MCT | 1.5 | 83 | 17 |

As shown in Table 27 the release effect is observed using pure MCT as a coating. The release effect is only increased with 17% when adding 3% PGE 308 as an emulsifier. Comparing this with the results obtained with using 3% PGE 308 in rapeseed oil (Table 1; 89%) it seems that the emulsifier has a better effect in rapeseed oil than in MCT.

## Claims

1. A polymer surface being coated at least partly with a coating composition consisting of a homogenous solution comprising substantially only one phase comprising at least one oil and at least one emulsifier, wherein the HLB-value of said emulsifier is above 5 and said emulsifier is present in an amount of 0.1-10 wt% of the coating composition, and wherein said polymer is a polyester or a polyolefin.

2. The polymer surface according to claim 1, **characterized in that**, said emulsifier is selected from diglycerol esters, polyglycerol fatty acid esters (PGEs), citric acid ester of mono-diglycerides (CITREM), diacetyl tartaric ester of mono-diglycerides (DATEM), monoglycerides, and mono-diglycerides of fatty acid esters.

3. The polymer surface according to claim 1 or 2, **characterized in that** the HLB-value of the emulsifier is in the range of 7 to 12.

4. The polymer surface according to any of the preceding claims, wherein said emulsifier is present in an amount of 0.3-8 wt% of the coating composition.

5. The polymer surface according to any one of claims 1-4, wherein the polymer is polypropylene or polyethylene terephthalate.

6. A container for holding a fluid comprising at least one inner surface, said inner surface being, in use, in contact with said fluid where said inner surface is a polymer surface coated at least partly with a coating composition consisting of a homogenous solution comprising substantially only one phase comprising at least one oil and at least one emulsifier, wherein the HLB-value of said emulsifier is above 5 and said emulsifier is present in an amount of 0.1-10 wt% of the coating composition, and wherein said polymer is a polyester or a polyolefin.

7. The container according to claim 6, **characterized in that** said fluid is a food product.

8. A method for coating a polymer surface, wherein the polymer is a polyester or a polyolefin, comprising the following steps:
a. mixing at least one oil and at least one emulsifier to form a coating composition consisting of a homogenous solution comprising substantially only one phase comprising at least one oil and at least one emulsifier, wherein the HLB-value of said emulsifier is above 5 and said emulsifier is present in an amount of 0.1-10 wt% of the coating composition;
b. contacting said polymer surface with said coating composition;
c. optionally, allowing excess coating composition to flow off said surface.

9. A use of a coating composition for improvement of release properties of a polymer surface by coating at least partly said surface with said coating composition consisting of a homogenous solution comprising substantially only one phase comprising at least one oil and at least one emulsifier, wherein the HLB-value of said emulsifier is above 5 and said emulsifier is present in an amount of 0.1-10 wt% of the coating composition, and wherein said polymer is a polyester or polyolefin.

10. The use of a coating composition according to claim 9, **characterized in that**, said at least one emulsifier is selected from diglycerol esters, polyglycerol fatty acid esters (PGEs), citric acid ester of mono-diglycerides (CITREM), diacetyl tartaric ester of mono-diglycerides (DATEM), monoglycerides, and mono-diglycerides of fatty acid esters.

11. The use of a coating composition according to any of the claims 9-10, **characterized in that** the HLB-value of the emulsifier is in the range of 7 to 12.

12. The use of a coating composition according to claim 9, **characterized in that** said emulsifier is present in an amount of 0.3-8 wt% of the coating composition.

## Patentansprüche

1. Polymeroberfläche, die zumindest teilweise mit einer Beschichtungszusammensetzung beschichtet ist, die aus einer homogenen Lösung besteht, die weitgehend nur eine Phase umfasst, die mindestens ein Öl und mindestens einen Emulgator umfasst, wobei der HLB-Wert des Emulgators über 5 liegt und der Emulgator in einer Menge von 0,1-10 Gew.-% der Beschichtungszusammensetzung vorliegt und wobei es sich bei dem Polymer um einen Polyester oder ein Polyolefin handelt.

2. Polymeroberfläche nach Anspruch 1, **dadurch gekennzeichnet, dass** der Emulgator aus Diglycerinestern, Polyglycerinfettsäureestern (PGE), Citronensäureester von Mono-diglyceriden (CITREM), Diacetylweinsäureester von Mono-diglyceriden (DATEM), Monoglyceriden und Mono-diglyceriden von Fettsäureestern ausgewählt ist.

3. Polymeroberfläche nach Anspruch 1 oder 2, **dadurch gekennzeichnet, dass** der HLB-Wert des Emulgators im Bereich von 7 bis 12 liegt.

4. Polymeroberfläche nach einem der vorhergehenden Ansprüche, wobei der Emulgator in einer Menge von 0,3-8 Gew.-% der Beschichtungszusammensetzung vorliegt.

5. Polymeroberfläche nach einem der Ansprüche 1-4, wobei es sich bei dem Polymer um Polypropylen oder Polyethylenterephthalat handelt.

6. Behälter zur Aufnahme eines Fluids mit mindestens einer inneren Oberfläche, wobei die innere Oberfläche im Gebrauch mit dem Fluid in Kontakt steht, wobei es sich bei der inneren Oberfläche um eine Polymeroberfläche handelt, die zumindest teilweise mit einer Beschichtungszusammensetzung beschichtet ist, die aus einer homogenen Lösung besteht, die weitgehend nur eine Phase umfasst, die mindestens ein Öl und mindestens einen Emulgator umfasst, wobei der HLB-Wert des Emulgators über 5 liegt und der Emulgator in einer Menge von 0,1-10 Gew.-% der Beschichtungszusammensetzung vorliegt und wobei es sich bei dem Polymer um einen Polyester oder ein Polyolefin handelt.

7. Behälter nach Anspruch 6, **dadurch gekennzeichnet, dass** es sich bei dem Fluid um ein Lebensmittelprodukt handelt.

8. Verfahren zum Beschichten einer Polymeroberfläche, wobei es sich bei dem Polymer um einen Polyester oder ein Polyolefin handelt, mit den folgenden Schritten:
a. Mischen von mindestens einem Öl und mindestens einem Emulgator zur Bildung einer Beschichtungszusammensetzung, die aus einer homogenen Lösung besteht, die weitgehend nur eine Phase umfasst, die mindestens ein Öl und mindestens einen Emulgator umfasst, wobei der HLB-Wert des Emulgators über 5 liegt und der Emulgator in einer Menge von 0,1-10 Gew.-% der Beschichtungszusammensetzung vorliegt;
b. Inkontaktbringen der Polymeroberfläche mit der Beschichtungszusammensetzung;
c. gegebenenfalls Ablaufenlassen von überschüssiger Beschichtungszusammensetzung von der Oberfläche.

9. Verwendung einer Beschichtungszusammensetzung zur Verbesserung der Freigabeeigenschaften einer Polymeroberfläche durch zumindest teilweises Beschichten der Oberfläche mit der Beschichtungszusammensetzung, die aus einer homogenen Lösung besteht, die weitgehend nur eine Phase umfasst, die mindestens ein Öl und mindestens einen Emulgator umfasst, wobei der HLB-Wert des Emulgators über 5 liegt und der Emulgator in einer Menge von 0,1-10 Gew.-% der Beschichtungszusammensetzung vorliegt, und wobei es sich bei dem Polymer um einen Polyester oder ein Polyolefin handelt.

10. Verwendung einer Beschichtungszusammensetzung nach Anspruch 9, **dadurch gekennzeichnet, dass** der Emulgator aus Diglycerinestern, Polyglycerinfettsäureestern (PGE), Citronensäureester von Mono-diglyceriden (CITREM), Diacetylweinsäureester von Mono-diglyceriden (DATEM), Monoglyceriden und Mono-diglyceriden von Fettsäureestern ausgewählt ist.

11. Verwendung einer Beschichtungszusammensetzung nach einem der Ansprüche 9-10, **dadurch gekennzeichnet, dass** der HLB-Wert des Emulgators im Bereich von 7 bis 12 liegt.

12. Verwendung einer Beschichtungszusammensetzung nach Anspruch 9, **dadurch gekennzeichnet, dass** der Emulgator in einer Menge von 0,3-8 Gew.-% der Beschichtungszusammensetzung vorliegt.

## Revendications

1. Surface de polymère recouverte au moins partiellement par une composition de revêtement consistant en une solution homogène comprenant pratiquement une seule phase comprenant au moins une huile et au moins un émulsifiant, la valeur HLB dudit émulsifiant étant supérieure à 5 et ledit émulsifiant étant présent dans une quantité de 0,1-10 % en poids de la composition de revêtement, et ledit polymère étant un polyester ou une polyoléfine.

2. Surface de polymère selon la revendication 1, **caractérisée en ce que** ledit émulsifiant est choisi parmi les esters de diglycérol, les esters d'acides gras de polyglycérol (PGE), l'ester d'acide citrique de mono-diglycérides (CITREM), l'ester diacétyltartrique de mono-diglycérides (DATEM), les monoglycérides, et les mono-diglycérides d'esters d'acides gras.

3. Surface de polymère selon la revendication 1 ou 2, **caractérisée en ce que** la valeur HLB de l'émulsifiant se situe dans la gamme de 7 à 12.

4. Surface de polymère selon l'une quelconque des revendications précédentes, dans laquelle ledit émulsifiant est présent dans une quantité de 0,3-8 % en poids de la composition de revêtement.

5. Surface de polymère selon l'une quelconque des revendications 1 à 4, dans laquelle le polymère est le polypropylène ou le téréphtalate de polyéthylène.

6. Récipient destiné à contenir un liquide comprenant au moins une surface interne, ladite surface interne étant, à l'usage, en contact avec ledit liquide, ladite surface interne étant une surface de polymère recouverte au moins partiellement par une composition de revêtement consistant en une solution homogène comprenant pratiquement une seule phase comprenant au moins une huile et au moins un émulsifiant, la valeur HLB dudit émulsifiant étant supérieure à 5 et ledit émulsifiant étant présent dans une quantité de 0,1-10 % en poids de la composition de revêtement, et ledit polymère étant un polyester ou une polyoléfine.

7. Récipient selon la revendication 6, **caractérisé en ce que** ledit liquide est un produit alimentaire.

8. Procédé de revêtement d'une surface de polymère, le polymère étant un polyester ou une polyoléfine, comprenant les étapes suivantes :
a. mélanger au moins une huile et au moins un émulsifiant pour former une composition de revêtement consistant en une solution homogène comprenant pratiquement une seule phase comprenant au moins une huile et au moins un émulsifiant, la valeur HLB dudit émulsifiant étant supérieure à 5 et ledit émulsifiant étant présent dans une quantité de 0,1-10 % en poids de la composition de revêtement ;
b. mettre ladite surface de polymère en contact avec ladite composition de revêtement ;
c. éventuellement, laisser l'excès de composition de revêtement couler hors de ladite surface.

9. Utilisation d'une composition de revêtement pour l'amélioration des propriétés de libération d'une surface de polymère par revêtement au moins partiel de ladite surface avec ladite composition de revêtement consistant en une solution homogène comprenant pratiquement une seule phase comprenant au moins une huile et au moins un émulsifiant, la valeur HLB dudit émulsifiant étant supérieure à 5 et ledit émulsifiant étant présent dans une quantité de 0,1-10 % en poids de la composition de revêtement, et ledit polymère étant un polyester ou une polyoléfine.

10. Utilisation d'une composition de revêtement selon la revendication 9, **caractérisée en ce que** ledit au moins un émulsifiant est choisi parmi les esters de diglycérol, les esters d'acides gras de polyglycérol (PGE), l'ester d'acide citrique de mono-diglycérides (CITREM), l'ester diacétyltartrique de mono-diglycérides (DATEM), les monoglycérides, et les mono-diglycérides d'esters d'acides gras.

11. Utilisation d'une composition de revêtement selon l'une quelconque des revendications 9 et 10, **caractérisée en ce que** la valeur HLB de l'émulsifiant se situe dans la gamme de 7 à 12.

12. Utilisation d'une composition de revêtement selon la revendication 9, **caractérisée en ce que** ledit émulsifiant est présent dans une quantité de 0,3-8 % en poids de la composition de revêtement.
